# EUROPÄISCHE PATENTANMELDUNG

(11) **EP 2 071 246 A2**
(43) Veröffentlichungstag der Anmeldung: **17.06.2009**
(21) Anmeldenummer: 08021353.1
(22) Anmeldetag: 09.12.2008
(51) Int. Cl.: F24D 13/02

(54) **Entkopplungsschicht**

(30) Priorität: 14.12.2007 DE 102007060961
(71) Anmelder: Jolly, Jürgen, 66578 Schiffweiler (DE)
(72) Erfinder: Jolly, Jürgen, 66578 Schiffweiler (DE)
(74) Vertreter: Bernhardt, Reinold

(57) **Zusammenfassung**

Die Erfindung betrifft eine Entkopplungsschicht (5) zur Einbettung in einen Oberbelag (2), insbesondere Fliesenbelag, mit einem Untergrund (3) verbindendes Material (4). Erfindungsgemäß umfasst die Entkopplungsschicht (5) ein Flächenheizelement (8). Vorteilhaft übernimmt neben ihrer Entkopplungsfunktion die Entkopplungsschicht (5) eine Heizfunktion.

## Beschreibung

Die Erfindung betrifft eine Entkopplungsschicht zur Einbettung in Material, das einen Oberbelag mit einem Untergrund verbindet.

Bekanntermaßen werden solche Entkopplungsschichten in den Kleber von Fliesenbelägen eingebettet. Durch die Entkopplungsschicht ist einerseits eine kraftschlüssige Verbindung zwischen dem Oberbelag und dem Untergrund möglich, sie ist andererseits aber so flexibel, dass sie Unterschiede in der Wärmeausdehnung von Oberbelag und Untergrund ausgleichen kann.

Besondere Schwierigkeiten treten auf, wenn die Funktion einer Entkopplungsschicht in Einklang mit einer ebenfalls in der Fliesenkleberschicht unterzubringenden Heizung gebracht werden soll.

Der-vorliegenden Erfindung liegt die Aufgabe zugrunde, die Funktion von Entkopplungsschichten zu erweitern.

Diese Aufgabe wird durch eine Entkopplungsschicht der eingangs erwähnten Art gelöst, die dadurch gekennzeichnet ist, dass sie ein Flächenheizelement umfasst.

Vorteilhaft kann die Entkopplungsschicht neben ihrer Entkopplungsfunktion eine Heizfunktion übernehmen.

In einer bevorzugten Ausführungsform der Erfindung umfasst das Flächenheizelement wenigstens einen flächenhaft ausgedehnten Heizleiter. Vorteilhaft bedarf ein Flächenheizelement mit einem solchen Heizleiter, der seine Wärme über die Fläche des Heizelements gleichmäßig verteilt abgibt, keiner besonderen, die Wärme verteilenden Schicht innerhalb der Kleberschicht.

Die Dicke des Flächenheizelements beträgt vorzugsweise nicht mehr als 0,5 mm.

In weiterer Ausgestaltung der Erfindung kann das Flächenheizelement zueinander parallel geschaltete und im Abstand zueinander angeordnete Heizleiterstreifen umfassen, deren Schichtdicke in der genannten Größenordnung liegt. Vorzugsweise ist im Hinblick auf eine gleichmäßige Wärmeabgabe der Abstand zwischen den Heizleiterstreifen geringer als die Breite der Heizleiterstreifen.

In einer Ausführungsform der Erfindung sind die Heizleiterstreifen bzw. ist der Heizleiter zwischen zwei isolierenden Folien laminiert, wobei die Folien ihrerseits mit jeweils einer oberen und einer unteren Entkopplungslage verbunden, insbesondere verklebt, sind. Alternativ könnte der Heizleiter unmittelbar zwischen zwei mit dem Fliesenkleber verbindbaren Entkopplungslagen angeordnet sein. Zweckmäßig ist der Heizleiter mit den Entkopplungslagen bzw. isolierenden Folien verklebt.

Der Heizleiter oder/und die Folien können Durchbrüche aufweisen, an denen eine direkte Verbindung zwischen den beiden Entkopplungslagen besteht. Vorteilhaft wirkt in diesem Falle das zwischen den Entkopplungslagen angeordnete Heizelement wie eine gitterartige Verstärkungseinlage.

Zweckmäßig ist der Heizleiter und ggf. sind die Folien unter Meidung wärmeisolierender Hohlräume mit seiner bzw. ihrer gesamten Fläche gegen die Entkopplungslagen angelegt.

Die Entkopplungslagen können ein organisches oder anorganisches Vlies umfassen. In Betracht kommen z.B. Glasfaservliese, Baumwollvliese und Filzstoffe, ggf. aus recycelten Materialen.

Die Erfindung wird nachstehend anhand eines Ausführungsbeispiels und der beiliegenden, sich auf dieses Ausführungsbeispiel beziehenden Zeichnungen weiter erläutert. Es zeigen:
- Fig. 1: ausschnittsweise einen Fliesenbelag mit einer Kopplungsschicht nach der Erfindung in einem Querschnitt,
- Fig. 2: ausschnittsweise die Kopplungsschicht von Fig. 1 in einem Querschnitt, und
- Fig. 3: einen Ausschnitt aus einem in der in der Kopplungsschicht von Fig. 2 verwendetes Flächenheizelement.

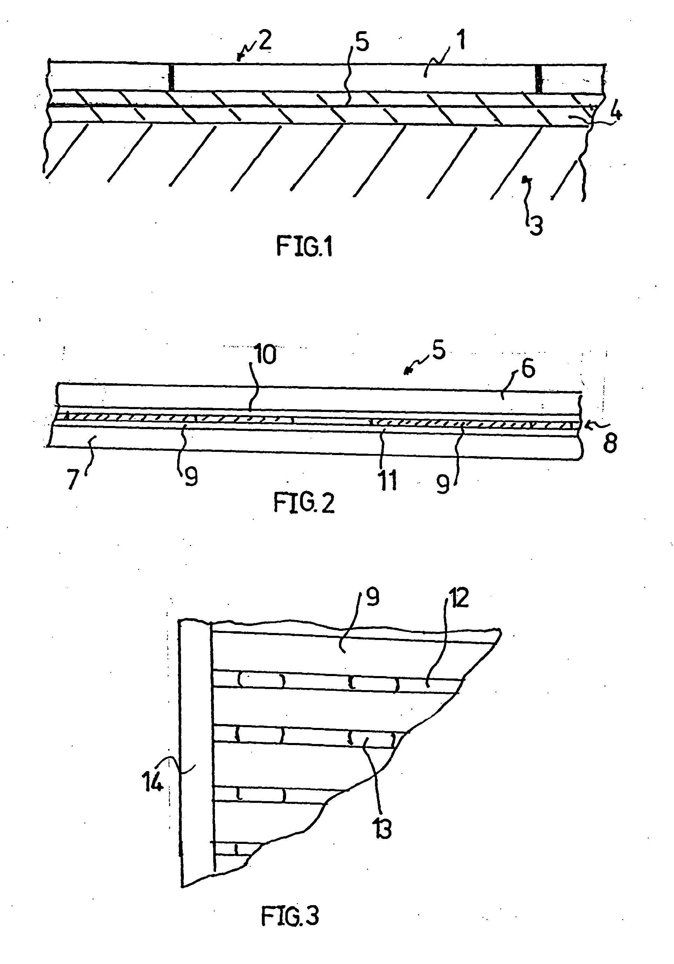

Ein in Fig. 1 ausschnittsweise im Querschnitt gezeigter Bodenbelag weist einen aus Fliesen 1 bestehenden Oberbelag 2 und eine den Oberbelag 2 mit einem Untergrund 3 verbindende Fliesenkleberschicht 4 auf.

In die Fliesenkleberschicht 4 ist eine flexible Entkopplungsschicht 5 eingebettet, welche unterschiedliche Wärmeausdehnungen des Oberbelags 2 und des Untergrundes 3 ausgleicht.

Die in Fig. 2 ausschnittsweise im Querschnitt dargestellte Entkopplungsschicht 5 weist eine obere Entkopplungslage 6 und eine untere Entkopplungslage 7 auf. Die Entkopplungslagen 6,7 bestehen in dem gezeigten Ausführungsbeispiel aus einem anorganischen Vlies.

Zwischen der oberen Entkopplungslage 6 und der unteren Entkopplungslage 7 ist ein bahnförmiges Flächenheizelement 8 angeordnet. Das Flächenheizelement 8 umfasst parallel zueinander im Abstand verlaufenden Heizleiterstreifen 9, deren Dicke in dem gezeigten Ausführungsbeispiel bei 0,3 mm liegt und die aus Kohlefasern bestehen, sowie zwei, die Heizleiterstreifen 9 zwischen sich einschließende Folien 10 und 11 aus isolierendem Kunststoffmaterial. Die Dicke des Heizelements 8 liegt in dem gezeigten Ausführungsbeispiel bei etwa 0,4 mm.

Die Folien 10 und 11 sind sowohl mit den Heizleiterstreifen 9 als auch den dagegen anliegenden Entkopplungslagen 6 und 7 verklebt.

Wie aus der Draufsicht von Fig. 3 hervorgeht, weisen die Folien 10 und 11 in den Zwischenräumen 12 zwischen den Heizleiterstreifen 9 jeweils Durchbrüche 13 auf. Im Bereich der Durchbrüche 13 sind die Entkopplungslagen 6 und 7 miteinander verklebt.

Das Flächenheizelement 8 umfasst ferner zwei im Abstand zueinander angeordnete Leiterschienen aus Kupfer, von denen in Fig. 3 die Leiterschiene 14 sichtbar ist. Die genannten Leiterschienen sind elektrisch mit den zueinander parallel geschalteten Heizleiterstreifen 9 verbunden und wie die Heizleiterstreifen 9 zwischen den genannten Folien 10 und 11 eingeschlossen.

Vorteilhaft erfüllt die Entkopplungsschicht 5 neben ihrer Entkopplungsfunktion auch eine Heizfunktion. Das flächenhaft ausgedehnte Heizelement 8 gibt gleichmäßig verteilt über seine Fläche Wärme ab, so dass auch der Oberbelag 1 weitgehend homogen erwärmt wird. Die Entkopplungslagen 6 und 7 sind einerseits selbst flexibel, um zur Lagenebene parallele Verschiebungen des oberen Teils der Fliesenkleberschicht 4 zu deren unterem Teil ausgleichen zu können. Andererseits trägt zu diesem Ausgleich eine gewisse Elastizität der über das Flächenheizelement 8 hergestellten Verbindung zwischen der oberen Entkopplungslage 6 und der unteren Entkopplungslage 7 bei.

Das Flächenheizelement 8 liegt über seine gesamte Fläche gegen die Entkopplungslagen 6 und 7 an. Zwischen dem Vlies und dem Fliesenkleber lässt sich eine Kleberverbindung herstellen, so dass sich die Entkopplungsschicht 5 kraftschlüssig in die Fliesenkleberschicht 4 einfügt.

## Patentansprüche

1. Entkopplungsschicht (5) zur Einbettung in Material (4), das einen Oberbelag (2), insbesondere Fliesenbelag, mit einem Untergrund (3) verbindet,
**dadurch gekennzeichnet,**
**dass** die Entkopplungsschicht (5) ein Flächenheizelement (8) umfasst.

2. Entkopplungsschicht nach Anspruch 1,
**dadurch gekennzeichnet,**
**dass** das Flächenheizelement (8) wenigstens einen flächenhaft ausgedehnten Heizleiter (9) umfasst.

3. Entkopplungsschicht nach Anspruch 1 oder 2,
**dadurch gekennzeichnet,**
**dass** das Flächenheizelement (8) zueinander parallel geschaltete und im Abstand zueinander angeordnete Heizleiterstreifen (9) umfasst.

4. Entkopplungsschicht nach Anspruch 2 oder 3,
**dadurch gekennzeichnet,**
**dass** die Dicke des Heizelements (8) kleiner als 0,5 mm ist.

5. Entkopplungsschicht nach Anspruch 3 oder 4,
**dadurch gekennzeichnet,**
**dass** der Abstand zwischen den Heizleiterstreifen (9) kleiner als die Breite der Heizleiterstreifen (9) ist.

6. Entkopplungsschicht nach einem der Ansprüche 2 bis 5,
**dadurch gekennzeichnet,**
**dass** der Heizleiter (9) unmittelbar zwischen zwei mit dem Material verbindbaren Entkopplungslagen (6,7) oder zwischen zwei isolierenden, mit solchen Entkopplungslagen (6,7) verbindbaren Folien (10,11) angeordnet ist.

7. Entkopplungsschicht nach Anspruch 6,
**dadurch gekennzeichnet,**
**dass** der Heizleiter (9) mit den Entkopplungslagen (6,7) bzw. isolierenden Folien (10,11) verklebt ist.

8. Entkopplungsschicht nach Anspruch 6 oder 7,
**dadurch gekennzeichnet,**
**dass** der Heizleiter (9) oder/und die Folien (10,11) Durchbrüche (13) aufweist bzw. aufweisen, an denen eine direkte Verbindung zwischen den beiden Entkopplungslagen (6,7) besteht.

9. Entkopplungsschicht nach einem der Ansprüche 4 bis 8,
**dadurch gekennzeichnet,**
**dass** der Heizleiter (9) und ggf. die Folien (10,11) unter Meidung wärmeisolierender Hohlräume mit seiner bzw. ihrer gesamten Fläche gegen die Entkopplungslagen (6,7) anliegt bzw. anliegen.

10. Entkopplungsschicht nach einem der Ansprüche 3 bis 9,
**dadurch gekennzeichnet,**
**dass** die Entkopplungslagen (6,7) ein organisches oder/und anorganisches Vlies umfassen.
